# EUROPEAN PATENT SPECIFICATION

(11) **EP 4 142 372 B1**
(45) Date of publication and mention of the grant of the patent: **01.05.2024**
(21) Application number: 20933831.8
(22) Date of filing: 28.04.2020
(51) Int. Cl.: H04L 45/85, H04W 28/02

(54) **METHOD AND APPARATUS FOR DETERMINING TERMINAL POLICY BEHAVIOR, AND NETWORK DEVICE**
VERFAHREN UND VORRICHTUNG ZUR BESTIMMUNG DES RICHTLINIENVERHALTENS EINES ENDGERÄTS UND NETZWERKVORRICHTUNG
PROCÉDÉ ET APPAREIL DE DÉTERMINATION DE COMPORTEMENT DE POLITIQUE DE TERMINAL, ET DISPOSITIF RÉSEAU

(43) Date of publication of application: 01.03.2023
(73) Proprietor: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Manitz Finsterwald Patent- und Rechtsanwaltspartnerschaft mbB
(86) International application number: PCT/CN2020/087472
(87) International publication number: WO 2021/217412

(56) References cited:
- CN-A- 110 519 795
- CN-A- 110 519 825
- CN-A- 110 839 261
- US-A1- 2018 262 924
- US-A1- 2019 268 835
- KDDI, Convida Wireless LLC, TOYOTA ITC, ZTE: "Adding Support for Delivering Background Data Transfer Polices to the UE", 3GPP Draft; S2-1904376 rev of 4337 and 03389 - xBDT - 23503 v8, 3rd Generation Partnership Project (3GPP), Mobile Competence Centre ; 650, route des Lucioles ; F-06921 Sophia-Antipolis Cedex ; France, vol. SA WG2, no. Xi’an, China; 20190408 - 20190412, 12 April 2019 (2019-04-12), XP051720155, Mobile Competence Centre ; 650, route des Lucioles ; F-06921 Sophia-Antipolis Cedex ; France

## Description

### TECHNICAL FIELD

Embodiments of the disclosure relate to the technical field of mobile communication, and particularly to a method and apparatus for determining a User Equipment (UE) policy behavior, and UE.

### BACKGROUND

User Equipment (UE) may not select an optimal UE Route Selection Policy (URSP) rule when using a URSP. As a result, some "undesired behaviors" of the UE may occur. However, a network side does not know about these behaviors, and thus cannot optimize a URSP configuration.

Document US 2018/262924 A1 provides a network data analytics (NWDA) function and method of policy optimization in a communication network. The NWDA performs data analytics on the communication network traffic, and includes communication interfaces to connect to other network elements in the communication network. The method comprises the NWDA function configured to receive a request for a policy input, send instructions to network elements to obtain network performance measurement data, receive the measurement data from the network elements, and transmit a policy input based on the received measurement data

Document CN 110 519 795 A discloses a method and a device for determining a background traffic transmission strategy, which are used for solving the problem of failure of subsequent background traffic transmission caused by conflicts among background traffic transmission strategies formulated by different strategy control network elements for different service network elements in the prior art. In this method, the data analysis network element can determine a background traffic transmission data analysis result of the first terminal device based on target background traffic transmission strategies of all other terminal devices (namely the second terminal device).

### SUMMARY

The invention is set out in the appended set of claims.

Through the above technical solutions, the first network element determines the UE policy behavior performed by the UE according to at least one of the first information sent by the UE, the second information sent by the PCF, the third information sent by the SMF or the fourth information sent by the application server, and then optimizes a URSP configuration according to an execution condition of the UE policy behavior.

### BRIEF DESCRIPTION OF THE DRAWINGS

The drawings described herein are used to provide a further understanding of the disclosure and form a part of the disclosure. Schematic embodiments of the disclosure and descriptions thereof are used to explain the disclosure and not intended to form improper limitations on the disclosure. In the drawings:
FIG. 1 is a schematic diagram of an architecture of a communication system.
FIG. 2 is a diagram of a 5th-Generation (5G) architecture.
FIG. 3 is a diagram of a UE Configuration Update (UCU) process.
FIG. 4 is a schematic diagram of binding an application data stream to a Protocol Data Unit (PDU) ses.
FIG. 5 is a flowchart of refusing PDU session establishment and retrying PDU session establishment.
FIG. 6 is a first flowchart of a method for determining a UE policy behavior according to an embodiment of the disclosure.
FIG. 7 is a second flowchart of a method for determining a UE policy behavior according to an embodiment of the disclosure.
FIG. 8 is a third flowchart of a method for determining a UE policy behavior according to an embodiment of the disclosure.
FIG. 9 is a structural composition diagram of an apparatus for determining a UE policy behavior according to an embodiment of the disclosure.
FIG. 10 is a schematic structural diagram of a communication device according to an embodiment of the disclosure.
FIG. 11 is a schematic structural diagram of a chip.
FIG. 12 is a schematic block diagram of a communication system.

### DETAILED DESCRIPTION

The technical solutions in the embodiments of the disclosure will be described below in combination with the drawings in the embodiments of the disclosure. Clearly, the described embodiments are not all but part of embodiments of the disclosure. All other embodiments obtained by those of ordinary skill in the art based on the embodiments of the disclosure without creative work shall fall within the scope of protection of the disclosure.

The technical solutions of the embodiments of the disclosure may be applied to various communication systems, for example, a Long Term Evolution (LTE) system, an LTE Frequency Division Duplex (FDD) system, an LTE Time Division Duplex (TDD) system, a 5G system, or a future communication system.

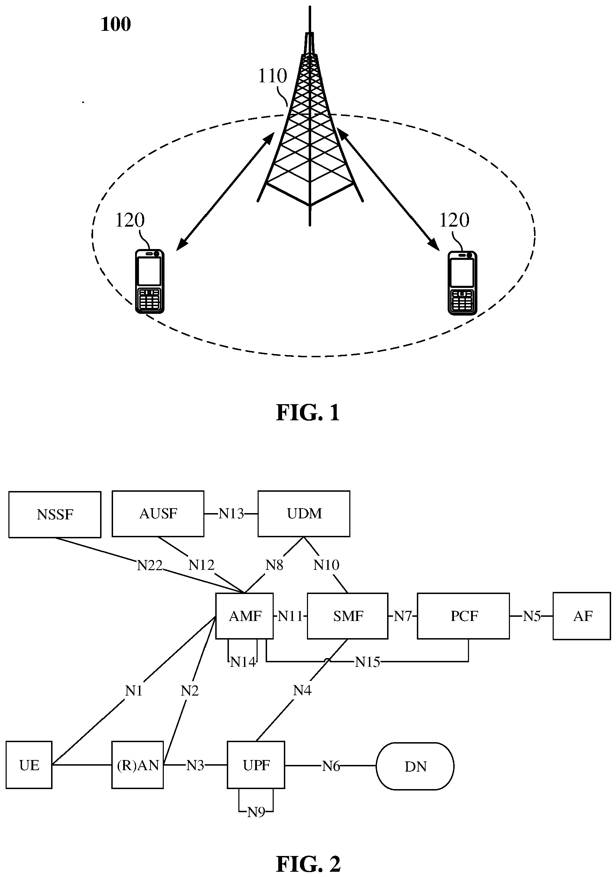

Exemplarily, FIG. 1 shows a communication system 100 that the embodiments of the disclosure are applied to. The communication system 100 may include a network device 110. The network device 110 may be a device that communicates with a terminal 120 (or referred to as a communication terminal and a terminal). The network device 110 may provide communication coverage for a specific geographical region and communicate with a terminal within the coverage. Optionally, the network device 110 may be an Evolutional Node B (eNB or eNodeB) in the LTE system, or a wireless controller in a Cloud Radio Access Network (CRAN). Alternatively, the network device may be a mobile switching center, a relay station, an access point, an onboard device, a wearable device, a hub, a switch, a network bridge, a router, a network-side device in the 5G network, a network device in a future communication system, or the like.

The communication system 100 further includes at least one terminal 120 within the coverage of the network device 110. The "terminal" used herein includes, but not limited to, a device configured to receive/send a communication signal through a wired line connection, for example, through Public Switched Telephone Network (PSTN), Digital Subscriber Line (DSL), digital cable and direct cable connections, and/or another data connection/network) and/or through a wireless interface, for example, for a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter, and/or another terminal, and/or an Internet of Things (IoT) device. The terminal configured to communicate through a wireless interface may be referred to as a "wireless communication terminal", a "wireless terminal", or a "mobile terminal." Examples of the mobile terminal include, but not limited to, a satellite or cellular telephone, a Personal Communication System (PCS) terminal capable of combining a cellular radio telephone and data processing, faxing, and data communication capabilities, a Personal Digital Assistant (PDA) capable of including a radio telephone, a pager, Internet/intranet access, a Web browser, a notepad, a calendar, and/or a Global Positioning System (GPS) receiver, and a conventional laptop and/or palmtop receiver or another electronic device including a radio telephone transceiver. The terminal may be an access terminal, UE, a user unit, a user station, a mobile station, a mobile radio station, a remote station, a remote terminal, a mobile device, a user terminal, a terminal, a wireless communication device, a user agent, or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle device, a wearable device, a terminal in the 5G network, a terminal in the future evolved PLMN, or the like.

Optionally, Device to Device (D2D) communication may be performed between the terminals 120.

Optionally, the 5G communication system or the 5G network may also be referred to as a New Radio (NR) system or an NR network.

One network device and two terminals are exemplarily shown in FIG. 1. Optionally, the communication system 100 may include multiple network devices, and there may be included another number of terminals in coverage of each network device. No limits are made thereto in the embodiments of the disclosure.

Optionally, the communication system 100 may further include another network entity, such as a network controller and a mobility management entity. No limits are made thereto in the embodiments of the disclosure.

It is to be understood that a device with a communication function in the network/system in the embodiments of the disclosure may be referred to as a communication device. For example, for the communication system 100 shown in FIG. 1, communication devices may include the network device 110 and terminal 120 with the communication function, and the network device 110 and the terminal 120 may be the specific devices mentioned above and will not be elaborated herein. The communication devices may further include other devices in the communication system 100, such as other network entities like a network controller and a mobility management entity. No limits are made thereto in the embodiments of the disclosure.

It is to be understood that terms "system" and "network" herein are usually interchangeable herein. As used herein, term "and/or" is only an association relationship describing associated objects, and represents that three relationships may exist. For example, A and/or B may represent three conditions: i.e., existence of only A, existence of both A and B, and existence of only B. In addition, character "/" herein usually represents that previous and next associated objects form an "or" relationship.

For ease of understanding the technical solutions of the embodiments of the disclosure, technical solutions related to the embodiments of the disclosure will be described below.

### 5G-architecture-based UE policy configuration method

FIG. 2 shows a 5G architecture. Devices involved in the 5G architecture include: UE, a RAN, a User Plane Function (UPF), a Data Network (DN), an Access and Mobility Management Function (AMF), an SMF, a PCF, an Application Function (AF), an Authentication Server Function (AUSF), and Unified Data Management (UDM).

As shown in FIG. 2, policy related network elements mainly include the PCF, the AMF, the SMF, the RAN, and the UE. The SMF is mainly responsible for executing session related policies. The AMF is mainly responsible for executing access and UE policy related policies. Policy transmission and update of the two network elements (the AMF and the SMF) are managed and controlled by the PCF.

Specific to a UE policy, information about the UE policy, including a content of the UE policy, an Identifier (ID) of the UE policy, etc., is monitored between the PCF and the UE through a container. In an uplink direction, the container is sent to the AMF by the UE through a Non Access Stratum (NAS) message, and continues to be transparently transmitted (without perception or modification) to the PCF by the AMF. Reversely, in a downlink direction, the container is sent to the AMF by the PCF, and is further transparently transmitted to the UE by the AMF through a NAS message.

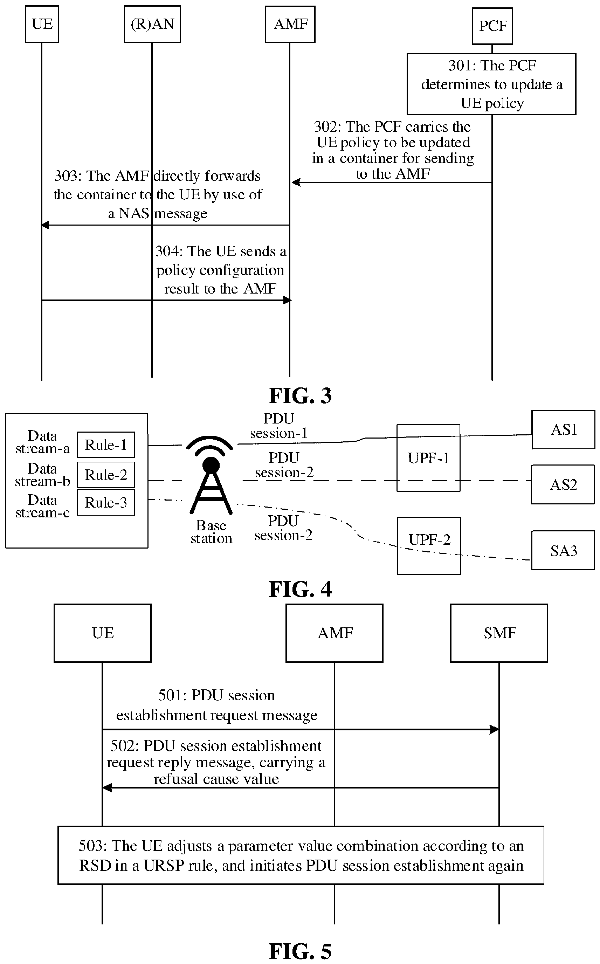

Based on the above-mentioned 5G architecture, configuration of a UE policy is implemented through a UCU process. As shown in FIG. 3, the UCU process includes the following operations.

At S301, the PCF determines to update a UE policy.

At S302, the PCF places the UE policy to be updated in a container for sending to the AMF.

At S303, the AMF directly forwards the container to the UE by use of a NAS message.

At S304, the UE sends a policy configuration result (result of the delivery of UE policies) to the AMF.

### Use of UE policies

UE policies include an Access Network Discovery and Selection Policy (ANDSP), a URSP, etc. The URSP determines a binding relationship between application data and a PDU session, as well as a PDU session that the UE needs to establish to meet such a binding relationship. As shown in FIG. 4, different application data streams are bound to different PDU sessions according to a URSP rule. Data stream-a is bound to PDU session-1 according to rule-1, data stream-b is bound to PDU session-2 according to rule-2, and data stream-c is bound to PDU session-3 according to rule-3.

Session attribute parameters associated with a PDU session include Single-Network Slice Selection Assistant Information (S-NSSAI), Data Network Name (DNN), PDU session ID, PDU session type, and Service and Session Continuity (SSC) mode.

The UE may carry the session attribute parameters in a PDU session establishment request message. Some of the session attribute parameters that are not carried may be supplemented by the network side. For example, if the PDU session establishment request message carries PDU session id=1, DNN-1, and PDU session type=IPv4, the SMF accepts the request, and supplements the following other attribute parameters: S-NSSAI=1 and SSC mode=1.

It is to be noted that, in such case, the UE and/or the network side may save session attribute parameters of a PDU session that is established successfully, and identify the session attribute parameters requested by the UE and the session attribute parameters supplemented by the network.

Referring to the following Table 1 and Table 2, the URSP includes multiple URSP rules, of which each consists of a traffic descriptor and a set of Route Selection Descriptors (RSDs). The traffic descriptor in the URSP is used to describe a specific service. For example, a Microblog service may be described with a range of Internet Protocol (IP) addresses 1 to 9. For another example, an IP Multimedia Subsystem (IMS) service may be described with an IMS DNN. Then, there may be one or more RSDs under a traffic descriptor. In an RSD, each of S-NSSAI and DNN may have one or more values, and each of the other parameters has a single value. Therefore, each RSD may correspond to one or more parameter value combinations, each of which is a set of features of the PDU session. Service data corresponding to the traffic descriptor may be transmitted in a PDU session corresponding to a certain parameter value combination of the RSD. When there is an application data stream described with a traffic descriptor, the UE may select a parameter value combination according to a corresponding RSD, and initiate a PDU session establishment request.

Every time when initiating a PDU session establishment request, the UE adds a set of session attribute parameters into the PDU session establishment request, i.e., a parameter value combination in an RSD table in a certain URSP rule.

**Table 1: Traffic Descriptor and List of Corresponding RSDs in URSP rule**

| **Information name** | **Description** | **Category** | **PCF permitted to modify in a UE context** | **Scope** |
|---|---|---|---|---|
| Rule Precedence | Determines the order the URSP rule is enforced in the UE. | Mandatory (NOTE 1) | Yes | UE context |
| **Traffic descriptor** | *This part defines the Traffic descriptor components for the URSP rule.* | Mandatory (NOTE 3) | | |
| Application descriptors | It consists of OSId and OSAppId(s). (NOTE 2) | Optional | Yes | UE context |
| IP descriptors (NOTE 5) | Destination IP 3 tuple(s) (IP address or IPv6 network prefix, port number, protocol ID of the protocol above IP). | Optional | Yes | UE context |
| Domain descriptors | Destination FQDN(s) | Optional | Yes | UE context |
| Non-IP descriptors (NOTE 5) | Descriptor(s) for destination information of non-IP traffic | Optional | Yes | UE context |
| DNN | This is matched against the DNN information provided bv the application. | Optional | Yes | UE context |
| Connection Capabilities | This is matched against the information provided by a UE application when it requests a network connection with certain capabilities. (NOTE 4) | Optional | Yes | UE context |
| **List of Route Selection Descriptors** | A list of Route Selection Descriptors. The components of a Route Selection Descriptor are described in table 6.6.2.1-3. | Mandatory | | |

**Table 2: RSD**

| **Information name** | **Description** | **Category** | **PCF permitted to modify in URSP** | **Scope** |
|---|---|---|---|---|
| Route Selection Descriptor Precedence | Determines the order in which the Route Selection Descriptors are to be applied. | Mandatory (NOTE 1) | Yes | UE context |
| **Route selection components** | *This part defines the route selection components* | Mandatory (NOTE 2) | | |
| SSC Mode Selection | One single value of SSC mode. (NOTE 5) | Optional | Yes | UE context |
| Network Slice Selection | Either a single value or a list of values of S-NSSAI(s). | Optional (NOTE 3) | Yes | UE context |
| DNN Selection | Either a single value or a list of values of DNN(s). | Optional | Yes | UE context |
| PDU Session Type Selection | One single value of PDU Session Type | Optional | Yes | UE context |
| Non-Seamless Offload indication | Indicates if the traffic of the matching application is to be offloaded to non-3GPP access outside of a PDU Session. | Optional (NOTE 4) | Yes | UE context |
| Access Type preference | Indicates the preferred Access Type (3GPP or non-3GPP or Multi-Access) when the UE establishes a PDU Session for the matching application. | Optional | Yes | UE context |

As shown in FIG. 4, the UE associates an application data stream with a corresponding PDU session for transmission based on a URSP rule through the following mechanism.

When there is data in an application layer, the UE checks, by use of URSP rules in a URSP, whether a feature of the application data is matched with a traffic descriptor of one of the URSP rules. A checking sequence is determined by precedences in the URSP rules. That is, the UE sequentially checks matching conditions based on an order of the precedences, and when a URSP rule is matched, binds a PDU session by use of an RSD list under the URSP rule.

When a URSP rule is matched, the following operations are performed.
(1) The UE checks first whether there is a PDU session satisfying effective RSDs under the matched URSP rule in PDU sessions that have been established at present. If YES, the matched application data is bound to the PDU session for transmission. Otherwise, the following operations are performed.
(2) A PDU session is tried to be established according to the order of the precedences in the effective RSDs. Here, an RSD with a high precedence is preferred to establish the PDU session. If a certain parameter in the RSD has one or more values, the UE selects one value to be combined with another parameter to establish the PDU session.

- If the PDU session is established successfully, the UE binds the application data to the PDU session for transmission.
- If the PDU session fails to be established, the UE retries to establish the PDU session based on another parameter value combination in the RSD or by use of a parameter value combination in an RSD with a next lower precedence.

If no proper PDU session may be found for binding according to the matched URSP, the UE checks, according to the order of the precedences, whether a traffic descriptor in a URSP rule with a next lower precedence may be matched with the feature of the application data. If YES, the processes of (1) and (2) are repeated.

The process of looking for or establishing a proper PDU session for application data is referred to as an "evaluation process". An RSD in a URSP rule may be regarded as an effective RSD only when satisfying the following conditions (here, the effective RSD is used to execute the evaluation process).
- If the RSD includes S-NSSAI, the S-NSSAI has to be one of Allowed NSSAI (non-roaming) or Mapping of Allowed NSSAI (roaming).
- If the RSD includes DNN and DNN is Local Area Data Network (LADN), the UE has to be within an effective region corresponding to the LADN.
- If the RSD includes access type preference that is set to multi-access, the UE has to support an Access Traffic Steering, Switching and Splitting (ATSSS) function.
- If the RSD includes time window and location criteria, the UE needs to satisfy required time and location conditions.

For an RSD that does not satisfy the above conditions, the UE may not use the RSD to bind application data or establish a PDU session.

According to the mechanism of the evaluation process, the UE may retry PDU session establishment according to the parameters in the RSD after PDU session establishment initiated by the UE is refused. As shown in FIG. 5, a process of refusing PDU session establishment and retrying PDU session establishment includes the following operations.

At S501, the UE sends a PDU session establishment request message to the SMF.

Here, the PDU session establishment request message carries at least one of the following session attribute parameters: DNN, S-NSSAI, PDU session type, SSC mode, or PDU session ID.

At S502, the SMF sends, to the UE, a PDU session establishment request reply message carrying a refusal cause value.

Here, if the network side refuses the session request, the refusal cause value may be carried in the PDU session establishment request reply message.

At S503, the UE adjusts a parameter value combination according to an RSD in a URSP rule, and initiates PDU session establishment again.

At present, the URSP mechanism has the following characteristics and problems.
(1) A parameter in a URSP rule, such as an application descriptor parameter in a traffic descriptor, may not be recognized by the UE. This is because, for example, some parameters are determined collaboratively by an operating company and a company of the UE rather than independently by the operating company. According to the evaluation process, the UE, if being unable to recognize a parameter in a URSP rule, will ignore the URSP rule automatically. However, the UE does not notify the network side of the specific URSP rule that is ignored or an RSD ignored in the URSP rule. As a result, some URSP rules issued by the network side may never be performed by the UE, while the network side does not know about this condition.
(2) When the UE receives a new URSP rule (for example, the UE receives a new URSP rule through a UCU process), the UE may reevaluate the new URSP rule and determine a new binding relationship between application data and a PDU session according to the new URSP rule. However, when the UE evaluates the new URSP rule and when to execute the new binding relationship are determined by the UE. The network, after updating the URSP rule for the UE, may not determine when the UE executes the new URSP rule to bind an application data stream.
(3) For each application data stream, the UE finally selects a PDU session corresponding to an RSD under a URSP rule through an evaluation process for data transmission. Then, this binding relationship remains unchanged for quite some time. A URSP rule and an RSD used by the UE for a specific application data stream may not have highest precedences, but the network side cannot determine the specific URSP rule and RSD used by the UE for the application data stream.

In summary, it may be regarded as an "undesired behavior" of the UE although not violating the evaluation mechanism because the UE does not execute the evaluation process according to a URSP rule with a highest precedence or most desired URSP rule issued by the network side. The network side cannot determine whether there is such an "undesired behavior". Therefore, a mechanism is needed to enable the network side to determine a "UE policy behavior" that is being performed by the UE. To this end, disclosed are the following technical solutions of the embodiments of the disclosure. It is to be noted that the technical solutions of the embodiments of the disclosure may be applied not only to a 5G network but also to a 4th-Generation (4G) network or a new network in the future.

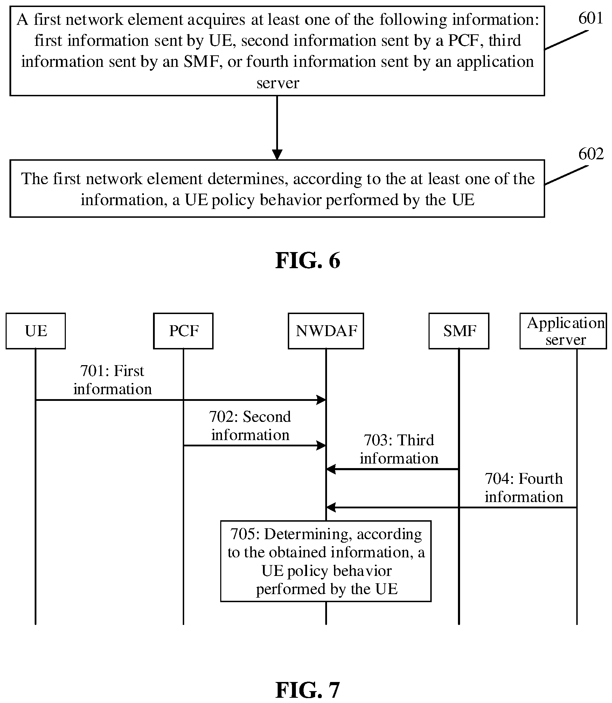

FIG. 6 is a first flowchart of a method for determining a UE policy behavior according to an embodiment of the disclosure. As shown in FIG. 6, the method for determining a UE policy behavior includes the following operations.

At S601, a first network element acquires at least one of the following information: first information sent by UE, second information sent by a PCF, third information sent by an SMF, or fourth information sent by an application server.

In the embodiment of the disclosure, the first network element is a network element with an analysis function. In an optional mode, the first network element is a Network Data Analysis Function (NWDAF).

In the embodiment of the disclosure, information acquired by the first network element includes at least one of first information sent by UE, second information sent by a PCF, third information sent by an SMF, or fourth information sent by an application server. The information will be described below in detail.

The first information sent by the UE

The first information sent by the UE includes at least one of first indication information, second indication information, or third indication information.

The first indication information is used to indicate at least one of a URSP rule that is being used by the UE, a traffic descriptor in the URSP rule that is being used by the UE, or an RSD in the URSP rule that is being used by the UE. Here, when the UE sends the traffic descriptor, all parameters in the traffic descriptor may be sent, or only part of parameters in the traffic descriptor may be sent.

The second indication information is used to indicate at least one of whether the UE already uses (or executes) an updated URSP rule, or an updated URSP rule already used (or performed) by the UE (that is, which updated URSP rules are already used or performed by the UE).

The third indication information is used to indicate at least one of a PDU session established by the UE for data transmission of a specific application, a URSP rule corresponding to the PDU session established by the UE, a traffic descriptor in the URSP rule corresponding to the PDU session established by the UE, or an RSD in the URSP rule corresponding to the PDU session established by the UE.

In an optional mode, the first information is sent to the first network element by the UE through a control plane message. Further, the control plane message is a NAS message. The first information is carried in the NAS message. Alternatively, the first information is carried in a container in the NAS message.

In another optional mode, the first information is sent to the first network element by the UE through a user plane message. Specifically, the first information is sent to a user plane network element by the UE through the user plane message, and forwarded to the first network element by the user plane network element. Optionally, a header of the user plane message carries a first ID, and the first ID is used to instruct the user plane network element to forward the user plane message to the first network element. Here, the header of the user plane message is optionally a Service Data Adaptation Protocol (SDAP) header or a General Packet Radio Service (GPRS) Tunneling Protocol-User plane (GTP-U) header. Optionally, the user plane network element is a UPF.

In the above solution, the first information sent by the UE may also be referred to as policy execution information.

In an optional mode, the UE may send seventh information to a network side. The seventh indication information is used to indicate, to the network side, that the UE makes a request for reporting the first information or has capability for reporting the first information. Optionally, the seventh indication information is further used to indicate contents in the first information that the UE is capable of or makes a request for reporting. The seventh indication information may be sent to the network side through an uplink NAS message. For example, the UE contains the seventh indication information in a registration request message for sending to the network side.

In an optional mode, the network side sends eighth indication information to the UE. The eighth indication information is used to indicate that the UE is required or allowed to report the first information. Further, the eighth indication information is optionally further used to indicate contents in the first information that the UE is required or allowed to report. Here, the network side may optionally be the first network element. The eighth indication information may be sent to the UE through a downlink NAS message. For example, the network side adds the eighth indication information to a registration reply message for sending to the UE.

The second information sent by the PCF

In an optional mode, the second information includes fourth indication information. The fourth indication information is used to indicate at least one of:
a URSP rule issued to the UE, a traffic descriptor in the URSP rule issued to the UE, a mapping relationship between a URSP rule issued to the UE and an application, or a mapping relationship between a traffic descriptor in a URSP rule issued to the UE and an application.

The third information sent by the SMF

In an optional mode, the third information includes fifth indication information. The fifth indication information is used to indicate at least one of:
a PDU session established by the UE, session attribute parameters corresponding to the PDU session established by the UE, a session attribute parameter requested by the UE among the session attribute parameters corresponding to the PDU session established by the UE (i.e., which session attribute parameter among the session attribute parameters corresponding to the PDU session established by the UE is requested by the UE), a session attribute parameter added by a network among the session attribute parameters corresponding to the PDU session established by the UE (i.e., which session attribute parameter among the session attribute parameters corresponding to the PDU session established by the UE is added by the network), or address information of the PDU session established by the UE.

Here, the address information of the PDU session optionally refers to IP address information of the PDU session.

The fourth information sent by the application server

In an optional mode, the fourth information includes sixth indication information. The sixth indication information is used to indicate at least one of:
address information of the UE, a PDU session used by an application data stream of the UE, an application ID corresponding to the application data stream of the UE, or a traffic descriptor parameter corresponding to the application data stream of the UE.

Here, the address information of the UE optionally refers to IP address information of the UE.

At S602, the first network element determines, according to the at least one of the information, a UE policy behavior performed by the UE.

In the embodiment of the disclosure, the first network element may analyze the at least one of the information to further determine a UE policy behavior performed by the UE. Specifically, the UE policy behavior includes at least one of:
a URSP rule that is being used by the UE;
an RSD in the URSP rule that is being used by the UE;
a URSP rule used by the UE for data transmission of a specific application;
an RSD in the URSP rule used by the UE for data transmission of the specific application;
a PDU session used by the UE for data transmission of the specific application;
whether the UE already uses an updated URSP rule; or
an updated URSP rule already used by the UE.

Here, the specific application may be an application corresponding to a specific application ID.

The technical solution of the embodiment of the disclosure will be described below in combination with specific application examples.

### First application example

A first network element receives first information (i.e., policy execution information) sent by UE. The first network element determines, based on the first information, a UE policy behavior that is being performed by the UE.

Further, the first network element optionally further receives at least one of the following information: second information sent by a PCF, third information sent by an SMF, or fourth information sent by an application server. The first network element determines, based on at least one of the first information, the second information, the third information or the fourth information, the UE policy behavior that is being performed by the UE.

It is to be noted that for contents of the first information, the second information, the third information and the fourth information, reference can be made to the descriptions in the above solution.

Referring to FIG. 7 that takes the condition that the first network element is an NWDAF as an example, the following operations are included.

At S701, the NWDAF receives first information sent by UE.

At S702, the NWDAF receives second information sent by a PCF.

At S703, the NWDAF receives third information sent by an SMF.

At S704, the NWDAF receives fourth information sent by an application server.

At S705, the NWDAF determines, according to the obtained information, a UE policy behavior performed by the UE.

It is to be noted that S702 to S704 are optional. Descriptions will be made below in combination with specific examples.

Example 1: the NWDAF obtains the following information:
- the first information sent by the UE: the UE is using RSD-3 in URSP-Rule2;
- the second information from the PCF: the following URSPs are transmitted to the UE:
   URSP-Rulel (RSD-1), corresponding to application ID-1 and application ID-2,
   URSP-Rule2 (RSD-1/2/3), corresponding to application ID-2, and
   URSP-Rule3 (RSD-1/2), corresponding to application ID-3; and
- the fourth information from the application server: there is made a request of detecting a network slice where data of application ID-2 is transmitted (or there is made a request of detecting S-NSSAI corresponding to a network slice where the data of application ID-2 is transmitted).

The NWDAF may determine, in combination with the above information, that the UE is using RSD-3 in URSP-Rule2 for data transmission of the application data of application ID-2, and the S-NSSAI parameter in RSD-3 is S-NSSAI-a. Therefore, the data of application ID-2 is transmitted on a network slice corresponding to S-NSSAI-a.

Example 2: the NWDAF obtains the following information:
- the first information sent by the UE: the UE is using RSD-3 in URSP-Rule2;
- the second information from the PCF: the following URSPs are transmitted to the UE:
   URSP-Rulel (RSD-1), corresponding to application ID-1 and application ID-2,
   URSP-Rule2 (RSD-1/2/3), corresponding to application ID-2, and
   URSP-Rule3 (RSD-1/2), corresponding to application ID-3; and
- the third information from the SMF: a corresponding relationship between PDU session-1 and a session attribute parameter (including a session attribute parameter requested by the UE).

The NWDAF may determine, in combination with the above information, a PDU session for transmission of application IDs 1, 2, and 3 respectively. Further, the NWDAF may send a determination result to another network element (such as a network management system) for statistical storage.

It is to be noted that the NWDAF is not the only network element that determines the UE policy behavior. In an optional mode, when the PCF does not provide the mapping relationship between the URSP rule and the application, the NWDAF may notify the PCF of the URSP rule that is being used by the UE and the corresponding RSD, and then the PCF determines the UE policy behavior.

### Second application example

A first network element receives at least one of the following information: second information sent by a PCF, third information sent by an SMF, or fourth information sent by an application server. The first network element determines, based on at least one of the second information, the third information or the fourth information, a UE policy behavior that is being performed by UE.

It is to be noted that for contents of the second information, the third information and the fourth information, reference can be made to the descriptions in the above solution.

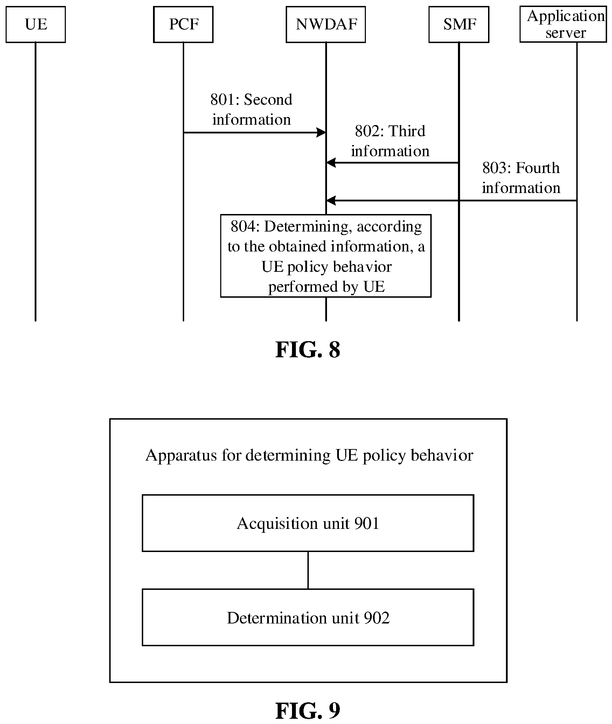

Referring to FIG. 8 that takes the condition that the first network element is an NWDAF as an example, the following operations are included.

At S801, the NWDAF receives second information sent by a PCF.

At S802, the NWDAF receives third information sent by an SMF.

At S803, the NWDAF receives fourth information sent by an application server.

At S804, the NWDAF determines, according to the obtained information, a UE policy behavior performed by UE.

It is to be noted that S801 to S803 are optionally performed partially or completely. Descriptions will be made below in combination with specific examples.

Example 3: the NWDAF obtains the following information:
- the third information from the SMF: PDU session-1 corresponds to IP address 1, PDU session-2 corresponds to IP address 2, and a session attribute parameter corresponding to PDU session-1 and requested by the UE includes S-NSSAI-1 and DNN-1;
- the second information from the PCF: the following URSPs are transmitted to the UE:
   URSP-Rulel (RSD-1) (RSD-1 consists of S-NSSAI-1 and DNN-1), corresponding to application ID-1 and application ID-2,
   URSP-Rule2 (RSD-1/2/3 does not include S-NSSAI-1), corresponding to application ID-2, and
   URSP-Rule3 (RSD-1/2), corresponding to application ID-3; and
- the fourth information from the application server: an IP address of the UE is IP address 1* (corresponding to IP address 1), and application ID-2.

It is to be noted that the IP address of the UE provided by the application server may be a public IP address obtained by Network Address Translation (NAT), while an IP address corresponding to a PDU session is a private IP address, and a conversion relationship therebetween may be controlled by a network side. That is, the IP address of the UE notified by the application server is IP address 1*, and a network of an operating company may know that IP address 1* corresponds to IP address 1.

The NWDAF may determine, in combination with the above information, that the UE is using PDU session-1 for transmission of an application data stream, and the UE is using URSP-Rulel (RSD1) for transmission of the application data stream.

Example 4: the NWDAF obtains the following information:
- the third information from the SMF: the UE has two PDU sessions: PDU session-1 and PDU session-2, where a session attribute parameter corresponding to PDU session-1 and requested by the UE includes S-NSSAI-1 and DNN-1, and a session attribute parameter corresponding to PDU session-2 and requested by the UE includes S-NSSAI-2 and DNN-2;
- the second information from the PCF: the following URSPs are transmitted to the UE:
   URSP-Rulel (RSD-1): traffic descriptor in the rule is IP address x,
   URSP-Rule2 (RSD-1/2/3, only RSD-2 consisting of S-NSSAI-2 and DNN-2): traffic descriptor in the rule is IP address y, and
   URSP-Rule3 (RSD-1/2): traffic descriptor in the rule is application descriptor-3; and
- the fourth information from the application server: traffic descriptor corresponding to an application is IP address y.

The NWDAF may determine, in combination with the above information, that the UE is using RSD-2 in URSP-Rule2 and PDU session-2 for transmission of application data.

Example 5: the NWDAF obtains the following information:
- the third information from the SMF: the UE has two PDU sessions: PDU session-1 and PDU session-2, where address information of PDU session-1 is IP address 1, while a session attribute parameter includes S-NSSAI-1 and DNN-1, and address information of PDU session-2 is IP address 2, while a session attribute parameter includes S-NSSAI-2 and DNN-2;
- the second information from the PCF: the following URSPs are transmitted to the UE:
   URSP-Rulel (RSD-1): RSD-1 consists of S-NSSAI-1 and DNN-1, and traffic descriptor in the rule is connection capabilities="internet",
   URSP-Rule2 (RSD-2): RSD-2 consists of S-NSSAI-2 and DNN-2, and traffic descriptor in the rule is connection capabilities="internet", and
   URSP-Rule3 (RSD-3): traffic descriptor in the rule is connection capabilities="IMS"; and
- the fourth information from the application server: address information of the UE is IP address 2, and traffic descriptor corresponding to an application is connection capabilities--"internet".

The NWDAF may determine, in combination with the above information, that the UE is using RSD-2 in URSP-Rule2 and PDU session-2 for transmission of application data.

In this example, the NWDAF determines the traffic descriptor and corresponding PDU session attribute parameter for the present application according to the address information of the UE and traffic descriptor that are obtained from the application server and the address information and session attribute parameters of the PDU sessions that are obtained from the SMF, and then compares the determined traffic descriptor and PDU session attribute parameter with the URSP rules (including the traffic descriptors and the corresponding PDU session attribute parameters) obtained from the PCF to determine the URSP rule that is being used by the UE. Alternatively, according to the address information of the UE and traffic descriptor that are obtained from the application server, the NWDAF compares the traffic descriptor with the URSP rules obtained from the PCF to determine the session attribute parameters of the PDU session that may be used by the UE, and determines, according to the session attribute parameter of the PDU session corresponding to the address information obtained from the SMF, the URSP rule that is being used by the UE.

### Example 6

The NWDAF obtains the following information:
- the third information from the SMF: the UE has two PDU sessions: PDU session-1 and PDU session-2, where address information of PDU session-1 is IP address 1, while a session attribute parameter includes S-NSSAI-1 and DNN-1, and address information of PDU session-2 is IP address 2, while a session attribute parameter includes S-NSSAI-2 and DNN-2;
- the second information from the PCF: the following URSPs are transmitted to the UE:
   URSP-Rulel (RSD-1): RSD-1 consists of S-NSSSAI-1 and DNN-1, and traffic descriptor in the rule is application descriptor="youtube service",
   URSP-Rule2 (RSD-2): RSD-2 consists of S-NSSAI-2 and DNN-2, and traffic descriptor in the rule is application descriptor="youtube service", and
   URSP-Rule3 (RSD-3): traffic descriptor in the rule is application descriptor="google service"; and
- the fourth information from the application server: address information of the UE is IP address 2, and an application ID is application ID-1.

In addition, the NWDAF may obtain, from the PCF, or obtain, based on preconfiguration information on the NWDAF, that the traffic descriptor corresponding to application ID-1 is application descriptor="youtube service". Here, it is to be noted that a mapping relationship between an application ID and a traffic descriptor may be obtained by the PCF or pre-configured on the NWDAF.

The NWDAF may determine, in combination with the above information, that the UE is using RSD-2 in URSP-Rule2 and PDU session-2 for transmission of application data.

It is to be noted that, in the above solution of the disclosure, the application ID is used to designate a specific application between a core network and the application server, and the application descriptor is used by the UE to recognize the specific application. They may differ in format and value but have a corresponding relationship. That is, there is a corresponding relationship between the application ID and the application descriptor.

According to the technical solutions of the embodiments of the disclosure, there is disclosed a mechanism capable of enabling the network side to determine whether the UE policy behavior performed by the UE is as desired, such that the network side determines whether the URSP rule performed by the UE is as desired by the network side. Therefore, the UE, a core network element (such as a PCF and an SMF), and the application server need to report related information, and then an analysis network element at the network side analytically obtains a corresponding result (for example, whether the UE is using a URSP rule with a highest precedence), and executes policy adjustment and update when necessary.

FIG. 9 is a structural composition diagram of an apparatus for determining a UE policy behavior according to an embodiment of the disclosure. The apparatus for determining a UE policy behavior is applied to a first network element, and as shown in FIG. 9, includes an acquisition unit 901 and a determination unit 902.

The acquisition unit 901 is configured to acquire at least one of the following information: first information sent by UE, second information sent by a PCF, third information sent by an SMF, or fourth information sent by an application server.

The determination unit 902 is configured to determine, according to the at least one of the information, a UE policy behavior performed by the UE.

In an optional mode, the UE policy behavior includes at least one of:
a URSP rule that is being used by the UE;
an RSD in the URSP rule that is being used by the UE;
a URSP rule used by the UE for data transmission of a specific application;
an RSD in the URSP rule used by the UE for data transmission of the specific application;
a PDU session used by the UE for data transmission of a specific application;
whether the UE already uses an updated URSP rule; or
an updated URSP rule already used by the UE.

The first information includes at least one of first indication information, second indication information, or third indication information.

The first indication information is used to indicate at least one of the URSP rule that is being used by the UE, a traffic descriptor in the URSP rule that is being used by the UE, or the RSD in the URSP rule that is being used by the UE.

The second indication information is used to indicate at least one of whether the UE already uses an updated URSP rule, or the updated URSP rule already used by the UE.

The third indication information is used to indicate at least one of a PDU session established by the UE for data transmission of a specific application, a URSP rule corresponding to the PDU session established by the UE, a traffic descriptor in the URSP rule corresponding to the PDU session established by the UE, or an RSD in the URSP rule corresponding to the PDU session established by the UE.

In an optional mode, the first information is sent to the first network element by the UE through a control plane message.

In an optional mode, the control plane message is a NAS message.

The first information is carried in the NAS message.

Alternatively, the first information is carried in a container in the NAS message.

In an optional mode, the first information is sent to the first network element by the UE through a user plane message.

In an optional mode, the first information is sent to a user plane network element by the UE through the user plane message, and forwarded to the first network element by the user plane network element.

In an optional mode, a header of the user plane message carries a first ID, and the first ID is used to instruct the user plane network element to forward the user plane message to the first network element.

In an optional mode, the second information includes fourth indication information. The fourth indication information is used to indicate at least one of:
a URSP rule issued to the UE, a traffic descriptor in the URSP rule issued to the UE, a mapping relationship between a URSP rule issued to the UE and an application, or a mapping relationship between a traffic descriptor in a URSP rule issued to the UE and an application.

In an optional mode, the third information includes fifth indication information. The fifth indication information is used to indicate at least one of:
a PDU session established by the UE, session attribute parameters corresponding to the PDU session established by the UE, a session attribute parameter requested by the UE among the session attribute parameters corresponding to the PDU session established by the UE, a session attribute parameter added by a network among the session attribute parameters corresponding to the PDU session established by the UE, or address information of the PDU session established by the UE.

In an optional mode, the fourth information includes sixth indication information. The sixth indication information is used to indicate at least one of:
address information of the UE, a PDU session used by an application data stream of the UE, an application ID corresponding to the application data stream of the UE, or a traffic descriptor parameter corresponding to the application data stream of the UE.

In an optional mode, the acquisition unit 901 is further configured to receive seventh indication information sent by the UE, the seventh indication information being used to indicate, to a network side, that the UE makes a request for reporting the first information or has capability for reporting the first information. Optionally, the seventh indication information is further used to indicate contents included in the first information that the UE is capable of reporting or makes a request for reporting. The seventh indication information may be sent to the network side through an uplink NAS message. For example, the UE contains the seventh indication information in a registration request message for sending to the network side.

In an optional mode, the apparatus further includes a sending unit (not shown in the figure), configured to send eighth indication information to the UE, the eighth indication information being used to indicate that the UE is required or allowed to report the first information. Further, the eighth indication information is optionally further used to indicate contents in the first information that the UE is required or allowed to report. Here, the network side may optionally be the first network element. The eighth indication information may be sent to the UE through a downlink NAS message. For example, the network side adds the eighth indication information to a registration reply message for sending to the UE.

It is to be understood by those skilled in the art that related descriptions of the apparatus for determining a UE policy behavior in the embodiment of the disclosure may be understood with reference to the related descriptions of the method for determining a UE policy behavior in the embodiments of the disclosure.

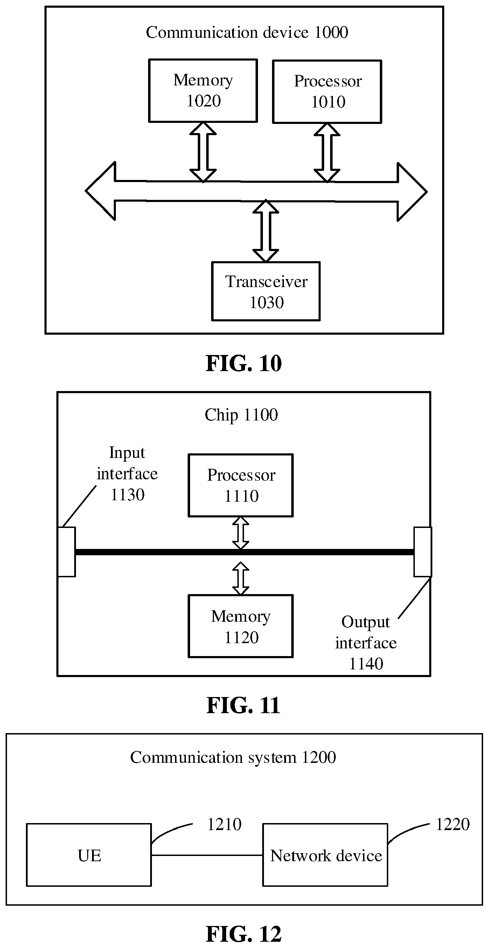

FIG. 10 is a schematic structure diagram of a communication device 1000 according to an embodiment of the disclosure. The communication device may be a terminal or a network device (such as the first network element in the above solution). The communication device 1000 shown in FIG. 10 includes a processor 1010. The processor 1010 may call a computer program from a memory and run the computer program to implement the method in the embodiments of the disclosure.

Optionally, as shown in FIG. 10, the communication device 1000 may further include a memory 1020. The processor 1010 may call, from the memory 1020, and run a computer program to implement the method in the embodiments of the disclosure.

The memory 1020 may be an independent device independent of the processor 1010, or may be integrated into the processor 1010.

Optionally, as shown in FIG. 10, the communication device 1000 may further include a transceiver 1030. The processor 1010 may control the transceiver 1030 to communicate with another device, specifically sending information or data to the other device or receiving information or data sent by the other device.

The transceiver 1030 may include a transmitter and a receiver. The transceiver 1030 may further include antennae. The number of the antennae may be one or more.

Optionally, the communication device 1000 may specifically be the network device of the embodiments of the disclosure. The communication device 1000 may implement the corresponding processes implemented by the network device in each method of the embodiments of the disclosure. For brevity, elaborations are omitted herein.

Optionally, the communication device 1000 may specifically be the mobile terminal/UE of the embodiments of the disclosure. The communication device 1000 may implement the corresponding processes implemented by the mobile terminal/UE in each method of the embodiments of the disclosure. For brevity, elaborations are omitted herein.

FIG. 11 is a schematic structure diagram of a chip according to an embodiment not being part of the present invention. The chip 1100 shown in FIG. 11 includes a processor 1110. The processor 1110 may call a computer program from a memory and run the computer program to implement the method in the embodiments of the disclosure.

Optionally, as shown in FIG. 11, the chip 1100 may further include a memory 1120. The processor 1110 may call, from the memory 1120, and run a computer program to implement the method in the embodiments of the disclosure.

The memory 1120 may be an independent device independent of the processor 1110, or may be integrated into the processor 1110.

Optionally, the chip 1100 may further include an input interface 1130. The processor 1110 may control the input interface 1130 to communicate with another device or chip, specifically acquiring information or data sent by the other device or chip.

Optionally, the chip 1100 may further include an output interface 1140. The processor 1110 may control the output interface 1140 to communicate with another device or chip, specifically sending information or data to the other device or chip.

Optionally, the chip may be applied to the network device of the embodiments of the disclosure. The chip may implement the corresponding processes implemented by the network device in each method of the embodiments of the disclosure. For brevity, elaborations are omitted herein.

Optionally, the chip may be applied to the mobile terminal/UE of the embodiment of the disclosure. The chip may implement the corresponding processes implemented by the mobile terminal/UE in each method of the embodiments of the disclosure. For brevity, elaborations are omitted herein.

It is to be understood that the chip mentioned in the embodiment of the disclosure may also be referred to as a system-level chip, a system chip, a chip system, a system on chip, or the like.

FIG. 12 is a schematic block diagram of a communication system 1200 according to an embodiment of the disclosure. As shown in FIG. 12, the communication system 1200 includes UE 1210 and a network device 1220.

The UE 1210 may be configured to realize corresponding functions realized by the UE in the method. The network device 1220 may be configured to realize corresponding functions realized by the network device in the method. For brevity, elaborations are omitted herein.

It is to be understood that the processor in the embodiment of the disclosure may be an integrated circuit chip with a signal processing capacity. During implementation, each step of the method embodiment may be completed by an integrated logical circuit in a hardware form in the processor or an instruction in a software form. The processor may be a general-purpose processor, a Digital Signal Processor (DSP), an Application Specific Integrated Circuit (ASIC), a Field Programmable Gate Array (FPGA) or another programmable logic device, a discrete gate or transistor logic device, and a discrete hardware component, and may implement or execute each method, step, and logical block diagram disclosed in the embodiment of the disclosure. The general-purpose processor may be a microprocessor. Alternatively, the processor may be any conventional processor, etc. The steps of the method disclosed in combination with the embodiment of the disclosure may be directly embodied to be performed by a hardware decoding processor or by a combination of hardware and software modules in the decoding processor. The software module may be in a mature storage medium in this art, such as a Random Access Memory (RAM), a flash memory, a Read-Only Memory (ROM), a Programmable ROM (PROM), or Electrically Erasable PROM (EEPROM), and a register. The storage medium is in a memory. The processor reads information in the memory and completes the steps of the method in combination with hardware.

It can be understood that the memory in the embodiment of the disclosure may be a volatile memory or a nonvolatile memory, or may include both volatile and nonvolatile memories. The nonvolatile memory may be a ROM, a PROM, an Erasable PROM (EPROM), an EEPROM, or a flash memory. The volatile memory may be a RAM, and is used as an external high-speed cache. It is exemplarily but unlimitedly described that RAMs in various forms may be used, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It is to be noted that the memory of the system and method described herein is intended to include, but not limited to, memories of these and any other proper types.

It is to be understood that the memory is exemplarily but unlimitedly described. For example, the memory in the embodiments of the disclosure may also be an SRAM, a DRAM, an SDRAM, a DDR SDRAM, an ESDRAM, an SLDRAM, and a DR RAM. That is, the memory in the embodiments of the disclosure is intended to include, but not limited to, memories of these and any other proper types.

An embodiment not being part of the present invention also provides a computer-readable storage medium, which is configured to store a computer program.

Optionally, the computer-readable storage medium may be applied to the network device in the embodiments of the disclosure. The computer program enables a computer to execute the corresponding processes implemented by the network device in each method of the embodiments of the disclosure. For brevity, elaborations are omitted herein.

Optionally, the computer-readable storage medium may be applied to the mobile terminal/UE in the embodiments of the disclosure. The computer program enables a computer to execute the corresponding processes implemented by the mobile terminal/UE in each method of the embodiments of the disclosure. For brevity, elaborations are omitted herein.

An embodiment not being part of the present invention also provides a computer program product, which includes a computer program instruction.

Optionally, the computer program product may be applied to the network device in the embodiments of the disclosure. The computer program instruction enables a computer to execute the corresponding processes implemented by the network device in each method of the embodiments of the disclosure. For brevity, elaborations are omitted herein.

Optionally, the computer program product may be applied to the mobile terminal/UE in the embodiments of the disclosure. The computer program instruction enables the computer to execute the corresponding processes implemented by the mobile terminal/UE in each method of the embodiments of the disclosure. For brevity, elaborations are omitted herein.

An embodiment not being part of the present invention also provides a computer program.

Optionally, the computer program may be applied to the network device in the embodiments of the disclosure. The computer program runs in a computer to enable the computer to execute the corresponding processes implemented by the network device in each method of the embodiments of the disclosure. For brevity, elaborations are omitted herein.

Optionally, the computer program may be applied to the mobile terminal/UE in the embodiments of the disclosure. The computer program runs in the computer to enable the computer to execute the corresponding processes implemented by the mobile terminal/UE in each method of the embodiments of the disclosure. For brevity, elaborations are omitted herein.

Those of ordinary skill in the art may realize that the units and algorithm steps of each example described in combination with the embodiments disclosed herein may be implemented by electronic hardware or a combination of computer software and electronic hardware. Whether these functions are performed by hardware or software depends on specific applications and design constraints of the technical solutions. Professionals may realize the described functions for each specific application by use of different methods, but such realization shall fall within the scope of the disclosure.

Those skilled in the art may clearly know that for specific working processes of the system, device and unit described above, reference can be made to the corresponding processes in the method embodiment, and they will not be elaborated herein for ease and brevity of description.

In some embodiments provided in the disclosure, it is to be understood that the disclosed system, apparatus, and method may be implemented in manners. For example, the apparatus embodiment described above is only schematic. For example, division of the units is only logic function division, and other division manners may be used during practical implementation. For example, multiple units or components may be combined or integrated into another system, or some characteristics may be neglected or not performed. In addition, coupling or direct coupling or communication connection between each displayed or discussed component may be indirect coupling or communication connection, implemented through some interfaces, of the apparatus or the units, and may be electrical and mechanical or adopt other forms.

The units described as separate parts may or may not be physically separated. Parts displayed as units may or may not be physical units, namely they may be located in the same place, or may be distributed to multiple network units. Part or all of the units may be selected to achieve the objectives of the solutions of the embodiments as practically needed.

In addition, each function unit in each embodiment of the disclosure may be integrated into a processing unit. Alternatively, each unit may physically exist independently. Alternatively, two or more than two units may be integrated into a unit.

When being realized in form of a software function unit and sold or used as an independent product, the function may also be stored in a computer-readable storage medium. Based on such an understanding, the technical solutions of the disclosure substantially or parts making contributions to the conventional art or part of the technical solutions may be embodied in form of a software product. The computer software product is stored in a storage medium, including a plurality of instructions for enabling a computer device (which may be a personal computer, a server, a network device, or the like) to execute all or part of the steps of the method in each embodiment of the disclosure. The above-mentioned storage medium includes various media capable of storing program codes, such as a U disk, a mobile hard disk, a ROM, a RAM, a magnetic disk, or an optical disk.

The above is only the specific implementation mode of the disclosure and not intended to limit the scope of protection of the disclosure. Any variations or replacements apparent to those skilled in the art within the technical scope disclosed in the disclosure shall fall within the scope of protection of the disclosure. Therefore, the scope of protection of the disclosure shall be subject to the scope of protection of the claims.

## Claims

1. A method for determining a User Equipment, UE, policy behavior, comprising:
acquiring (601), by a first network element, first information sent by UE; and
determining (602), by the first network element according to the first information, a UE policy behavior that is being performed by the UE,
wherein the first information comprises: third indication information, used to indicate at least one of: a traffic descriptor in a UE Route Selection Policy, URSP, rule corresponding to a Protocol Data Unit, PDU, session established by the UE, or a Route Selection Descriptor, RSD, in the URSP rule corresponding to the PDU session established by the UE.

2. The method of claim 1, wherein the UE policy behavior comprises:
a URSP rule used by the UE for data transmission of a specific application.

3. The method of claim 1 or 2, wherein the first information further comprises:
first indication information, used to indicate at least one of the URSP rule that is being used by the UE, or a traffic descriptor in the URSP rule that is being used by the UE.

4. The method of any one of claims 1-3, further comprising:
receiving, by the first network element, seventh indication information sent by the UE, the seventh indication information being used to indicate, to a network side, that the UE has capability for reporting the first information.

5. The method of any one of claims 1-4, further comprising:
sending, by the first network element, eighth indication information to the UE, the eighth indication information being used to indicate that the UE is required to report the first information.

6. An apparatus for determining a User Equipment, UE, policy behavior, applied to a first network element, comprising:
an acquisition unit (901), configured to acquire first information sent by UE; and
a determination unit (902), configured to determine, according to the first information, a UE policy behavior that is being performed by the UE,
wherein the first information comprises: third indication information, used to indicate at least one of: a traffic descriptor in a UE Route Selection Policy, URSP, rule corresponding to a Protocol Data Unit, PDU, session established by the UE, or a Route Selection Descriptor, RSD, in the URSP rule corresponding to the PDU session established by the UE.

7. The apparatus of claim 6, wherein the UE policy behavior comprises:
a URSP rule used by the UE for data transmission of a specific application.

8. The apparatus of claim 6 or 7, wherein the first information further comprises:
first indication information, used to indicate at least one of the URSP rule that is being used by the UE, or a traffic descriptor in the URSP rule that is being used by the UE.

9. The apparatus of any one of claims 6-8, wherein the acquisition unit is further configured to receive seventh indication information sent by the UE, the seventh indication information being used to indicate, to a network side, that the UE has capability for reporting the first information.

10. The apparatus of any one of claims 6-9, further comprising:
a sending unit, configured to send eighth indication information to the UE, the eighth indication information being used to indicate that the UE is required to report the first information.

11. User Equipment, UE, comprising: a memory, a processor configured to call and run a computer program from the memory, and a transceiver, wherein
the processor is configured to control the transceiver to send first information to a first network element, wherein the first information is used for the first network element to determine a UE policy behavior that is being performed by the UE,
wherein the first information comprises: third indication information, used to indicate at least one of: a traffic descriptor in a UE Route Selection Policy, URSP, rule corresponding to a Protocol Data Unit, PDU, session established by the UE, or a Route Selection Descriptor, RSD, in the URSP rule corresponding to the PDU session established by the UE.

12. The UE of claim 11, wherein the UE policy behavior comprises:
a URSP rule used by the UE for data transmission of a specific application.

13. The UE of claim 11 or 12, wherein the first information further comprises:
first indication information, used to indicate at least one of the URSP rule that is being used by the UE, or a traffic descriptor in the URSP rule that is being used by the UE.

14. The UE of any one of claims 11-13, wherein the processor is further configured to control the transceiver to send seventh indication information sent to the first network element, the seventh indication information being used to indicate, to a network side, that the UE has capability for reporting the first information.

15. The UE of any one of claims 11-14, wherein the processor is further configured to control the transceiver to receive eighth indication information from the first network element, the eighth indication information being used to indicate that the UE is required to report the first information.

## Patentansprüche

1. Verfahren zum Bestimmen eines Richtlinienverhaltens eines Benutzergeräts, UE, umfassend:
Erfassen (601), durch ein erstes Netzelement, von ersten Informationen, die von einem UE gesendet werden; und
Bestimmen (602), durch das erste Netzelement gemäß den ersten Informationen, eines UE-Richtlinienverhaltens, das vom UE durchgeführt wird,
wobei die ersten Informationen umfassen: dritte Anzeigeinformationen, die zum Anzeigen von mindestens einem der folgenden Elemente verwendet werden: einem Verkehrsdeskriptor in einer "UE Route Selection Policy", URSP-, Regel, die einer vom UE eingerichteten "Protocol Data Unit", PDU, entspricht, oder einem "Route Selection Descriptor", RSD, in der URSP-Regel, die der vom UE eingerichteten PDU-Sitzung entspricht.

2. Verfahren nach Anspruch 1, wobei das UE-Richtlinienverhalten umfasst:
eine URSP-Regel, die vom UE zur Datenübertragung einer spezifischen Anwendung verwendet wird.

3. Verfahren nach Anspruch 1 oder 2, wobei die ersten Informationen ferner umfassen:
erste Anzeigeinformationen, die verwendet werden, um mindestens eine der URSP-Regeln, die vom UE verwendet werden, oder einen Verkehrsdeskriptor in der URSP-Regel, die vom UE verwendet wird, anzuzeigen.

4. Verfahren nach einem der Ansprüche 1 bis 3, ferner umfassend:
Empfangen, durch das erste Netzelement, von siebten Anzeigeinformationen, die vom UE gesendet werden, wobei die siebten Anzeigeinformationen verwendet werden, um einer Netzseite anzuzeigen, dass das UE die Fähigkeit hat, die ersten Informationen zu melden.

5. Verfahren nach einem der Ansprüche 1 bis 4, ferner umfassend:
Senden, durch das erste Netzelement, von achten Anzeigeinformationen an das UE, wobei die achten Anzeigeinformationen verwendet werden, um anzuzeigen, dass das UE die ersten Informationen zu melden hat.

6. Vorrichtung zum Bestimmen eines Richtlinienverhaltens eines Benutzergeräts, UE, angewandt auf ein erstes Netzelement, umfassend:
eine Erfassungseinheit (901), die dafür ausgelegt ist, erste Informationen zu erfassen, die vom UE gesendet werden; und
eine Bestimmungseinheit (902), die dafür ausgelegt ist, gemäß den ersten Informationen ein UE-Richtlinienverhalten zu bestimmen, das vom UE durchgeführt wird,
wobei die ersten Informationen umfassen: dritte Anzeigeinformationen, die zum Anzeigen von mindestens einem der folgenden Elemente verwendet werden: einem Verkehrsdeskriptor in einer "UE Route Selection Policy", URSP-, Regel, die einer vom UE eingerichteten "Protocol Data Unit", PDU, entspricht, oder einem "Route Selection Descriptor", RSD, in der URSP-Regel, die der vom UE eingerichteten PDU-Sitzung entspricht.

7. Vorrichtung nach Anspruch 6, wobei das UE-Richtlinienverhalten umfasst:
eine URSP-Regel, die vom UE zur Datenübertragung einer spezifischen Anwendung verwendet wird.

8. Vorrichtung nach Anspruch 6 oder 7, wobei die ersten Informationen ferner umfassen:
erste Anzeigeinformationen, die verwendet werden, um mindestens eine der URSP-Regeln, die vom UE verwendet werden, oder einen Verkehrsdeskriptor in der URSP-Regel, die vom UE verwendet wird, anzuzeigen.

9. Vorrichtung nach einem der Ansprüche 6 bis 8, wobei die Erfassungseinheit ferner dafür ausgelegt ist, vom UE gesendete siebte Anzeigeinformationen zu empfangen, wobei die siebten Anzeigeinformationen verwendet werden, um einer Netzseite anzuzeigen, dass das UE die Fähigkeit hat, die ersten Informationen zu melden.

10. Vorrichtung nach einem der Ansprüche 6 bis 9, ferner umfassend:
eine Sendeeinheit, die dafür ausgelegt ist, achte Anzeigeinformationen an das UE zu senden, wobei die achten Anzeigeinformationen verwendet werden, um anzuzeigen, dass das UE die ersten Informationen zu melden hat.

11. Benutzergerät, UE, umfassend: einen Speicher, einen Prozessor, der dafür ausgelegt ist, ein Computerprogramm aus dem Speicher aufzurufen und auszuführen, und einen Sender-Empfänger,
wobei der Prozessor dafür ausgelegt ist, den Sender-Empfänger zum Senden von ersten Informationen an ein erstes Netzelement zu steuern, wobei die ersten Informationen für das erste Netzelement verwendet werden, um ein UE-Richtlinienverhalten zu bestimmen, das vom UE durchgeführt wird,
wobei die ersten Informationen umfassen: dritte Anzeigeinformationen, die zum Anzeigen von mindestens einem der folgenden Elemente verwendet werden: einem Verkehrsdeskriptor in einer "UE Route Selection Policy", URSP-, Regel, die einer vom UE eingerichteten "Protocol Data Unit", PDU, entspricht, oder einem "Route Selection Descriptor", RSD, in der URSP-Regel, die der vom UE eingerichteten PDU-Sitzung entspricht.

12. UE nach Anspruch 11, wobei das UE-Richtlinienverhalten umfasst:
eine URSP-Regel, die vom UE zur Datenübertragung einer spezifischen Anwendung verwendet wird.

13. UE nach Anspruch 11 oder 12, wobei die ersten Informationen ferner umfassen:
erste Anzeigeinformationen, die verwendet werden, um mindestens eine der URSP-Regeln, die vom UE verwendet werden, oder einen Verkehrsdeskriptor in der URSP-Regel, die vom UE verwendet wird, anzuzeigen.

14. UE nach einem der Ansprüche 11 bis 13, wobei der Prozessor ferner dafür ausgelegt ist, den Sender-Empfänger zum Senden von siebten Anzeigeinformationen, die an das erste Netzelement gesendet werden, zu steuern, wobei die siebten Anzeigeinformationen verwendet werden, um einer Netzseite anzuzeigen, dass das UE die Fähigkeit hat, die ersten Informationen zu melden.

15. UE nach einem der Ansprüche 11 bis 14, wobei der Prozessor ferner dafür ausgelegt ist, den Sender-Empfänger zum Empfangen von achten Anzeigeinformationen vom ersten Netzelement zu steuern, wobei die achten Anzeigeinformationen verwendet werden, um anzuzeigen, dass das UE die ersten Informationen zu melden hat.

## Revendications

1. Procédé permettant de déterminer le comportement de politique d'un équipement d'utilisateur, UE, comprenant :
l'acquisition (601), par un premier élément de réseau, de premières informations envoyées par l'UE ; et
la détermination (602), par le premier élément de réseau en fonction des premières informations, d'un comportement de politique de l'UE, qui est exécuté par l'UE,
dans lequel les premières informations comprennent : des troisièmes informations d'indication, utilisées pour indiquer au moins l'un : d'un descripteur de trafic dans une règle de Politique de Sélection de Route d'UE, URSP, correspondant à une session d'Unité de Données de Protocole, PDU, établie par l'UE, ou d'un Descripteur de Sélection de Route, RSD, dans la règle URSP correspondant à la session PDU établie par l'UE.

2. Procédé selon la revendication 1, dans lequel le comportement de politique de l'UE comprend :
une règle URSP utilisée par l'UE pour la transmission de données d'une application spécifique.

3. Procédé selon la revendication 1 ou 2, dans lequel les premières informations comprennent en outre :
des premières informations d'indication, utilisées pour indiquer au moins l'une de la règle URSP qui est utilisée par l'UE, ou d'un descripteur de trafic dans la règle URSP qui est utilisée par l'UE.

4. Procédé selon l'une quelconque des revendications 1-3, comprenant en outre :
la réception, par le premier élément de réseau, de septièmes informations d'indication envoyées par l'UE, les septièmes informations d'indication étant utilisées pour indiquer, à un côté réseau, que l'UE a la capacité de signaler les premières informations.

5. Procédé selon l'une quelconque des revendications 1-4, comprenant en outre :
l'envoi, par le premier élément de réseau, de huitièmes informations d'indication à l'UE, les huitièmes informations d'indication étant utilisées pour indiquer que l'UE doit signaler les premières informations.

6. Appareil permettant de déterminer le comportement de politique d'un équipement d'utilisateur, UE, appliqué à un premier élément de réseau, comprenant :
une unité d'acquisition (901), configurée pour acquérir des premières informations envoyées par l'UE ; et
une unité de détermination (902), configurée pour déterminer, en fonction des premières informations, un comportement de politique de l'UE, qui est exécuté par l'UE,
dans lequel les premières informations comprennent : des troisièmes informations d'indication, utilisées pour indiquer au moins l'un : d'un descripteur de trafic dans une règle de Politique de Sélection de Route d'UE, URSP, correspondant à une session d'Unité de Données de Protocole, PDU, établie par l'UE, ou d'un Descripteur de Sélection de Route, RSD, dans la règle URSP correspondant à la session PDU établie par l'UE.

7. Appareil selon la revendication 6, dans lequel le comportement de politique de l'UE comprend :
une règle URSP utilisée par l'UE pour la transmission de données d'une application spécifique.

8. Procédé selon la revendication 6 ou 7, dans lequel les premières informations comprennent en outre :
des premières informations d'indication, utilisées pour indiquer au moins l'une de la règle URSP qui est utilisée par l'UE, ou d'un descripteur de trafic dans la règle URSP qui est utilisée par l'UE.

9. Appareil selon l'une quelconque des revendications 6-8, dans lequel l'unité d'acquisition est en outre configurée pour recevoir des septièmes informations d'indication envoyées par l'UE, les septièmes informations d'indication étant utilisées pour indiquer, à un côté réseau, que l'UE a la capacité de signaler les premières informations.

10. Appareil selon l'une quelconque des revendications 6-9, comprenant en outre :
une unité d'envoi, configurée pour envoyer des huitièmes informations d'indication à l'UE, les huitièmes informations d'indication étant utilisées pour indiquer que l'UE doit signaler les premières informations.

11. Équipement de l'utilisateur, UE, comprenant : une mémoire, un processeur configuré pour appeler et exécuter un programme informatique à partir de la mémoire, et un émetteur-récepteur,
dans lequel le processeur est configuré pour commander l'émetteur-récepteur afin d'envoyer des premières informations à un premier élément de réseau, dans lequel les premières informations sont utilisées par le premier élément de réseau pour déterminer un comportement de politique de l'UE, qui est exécuté par l'UE,
dans lequel les premières informations comprennent : des troisièmes informations d'indication, utilisées pour indiquer au moins l'un : d'un descripteur de trafic dans une règle de Politique de Sélection de Route d'UE, URSP, correspondant à une session d'Unité de Données de Protocole, PDU, établie par l'UE, ou d'un Descripteur de Sélection de Route, RSD, dans la règle URSP correspondant à la session PDU établie par l'UE.

12. UE selon la revendication 11, dans lequel le comportement de politique de l'UE comprend :
une règle URSP utilisée par l'UE pour la transmission de données d'une application spécifique.

13. UE selon la revendication 11 ou 12, dans lequel les premières informations comprennent en outre :
des premières informations d'indication, utilisées pour indiquer au moins l'une de la règle URSP qui est utilisée par l'UE, ou d'un descripteur de trafic dans la règle URSP qui est utilisée par l'UE.

14. UE selon l'une quelconque des revendications 11-13, dans lequel le processeur est en outre configuré pour commander l'émetteur-récepteur afin d'envoyer les septièmes informations d'indication au premier élément de réseau, les septièmes informations d'indication étant utilisées pour indiquer, à un côté réseau, que l'UE a la capacité de signaler les premières informations.

15. UE selon l'une quelconque des revendications 11-14, dans lequel le processeur est en outre configuré pour commander l'émetteur-récepteur afin de recevoir des huitièmes informations d'indication en provenance du premier élément de réseau, les huitièmes informations d'indication étant utilisées pour indiquer que l'UE doit signaler les premières informations.
